(19) Europäisches Patentamt
European Patent Office
Office européen des brevets

(11) **EP 4 572 226 A1**

(12) **EUROPEAN PATENT APPLICATION**

(43) Date of publication:
**18.06.2025 Bulletin 2025/25**

(51) International Patent Classification (IPC):
**H04L 9/08** (2006.01)  **H04B 10/70** (2013.01)

(21) Application number: **23217229.6**

(52) Cooperative Patent Classification (CPC):
**H04L 9/0858; H04B 10/70**

(22) Date of filing: **15.12.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Deutsche Telekom AG**
  **53113 Bonn (DE)**
• **Technische Universität München**
  **80333 München (DE)**

(72) Inventors:
• **LI CALSI, Davide**
  **München (DE)**

• **NÖTZEL, Janis**
  **München (DE)**
• **RIBEIRO SENA, Matheus**
  **Berlin (DE)**
• **Dr. GEITZ, Marc**
  **Hagen (DE)**

(74) Representative: **Braun-Dullaeus Pannen Emmerling**
**Patent- & Rechtsanwaltspartnerschaft mbB**
**Platz der Ideen 2**
**40476 Düsseldorf (DE)**

Remarks:
Amended claims in accordance with Rule 137(2) EPC.

(54) **TECHNIQUES FOR PREVENTING MANIPULATION OF INFORMATION BETWEEN A SENDER AND A RECEIVER**

(57) Techniques for preventing manipulation of information between a sender and a receiver, comprising the following steps
• Specifying a bit state b=0 or b=1 of a collection of photons, in particular N times, the bit state of the photons of the collection representing information, in particular a message, which is to be exchanged between the sender and a receiver in a tamper-proof manner;
• transferring the collection of photons, in particular N times, into the specified bit state,
wherein the collection of photons, in particular all N photons, traverses at least along a section of their data path from the sender to the receiver through an entanglement-breaking channel in order to break the entanglement of the photons within the collection, in particular the entanglement between the photons of the collection and a corresponding further photons that were originally in an entangled state.

Fig. 2

EP 4 572 226 A1

**Description**

The invention relates to techniques for preventing manipulation of information between a sender and a receiver.

Bit Commitment (BC) is a fundamental cryptographic primitive. Bit commitment is a fundamental concept in cryptography, playing a crucial role in ensuring secure communication, cryptographic protocols, and applications such as digital currencies, voting systems and as a basis for further security techniques between two parties, Alice and Bob. Theoretically, at its core, bit commitment involves a party, known as the committer, committing to a (binary) value (0 or 1) in such a way that it becomes computationally infeasible to change the committed value later on. The commitment is kept secret until the committer decides to reveal it, at which point the other party, known as the verifier, can verify the original commitment.

Key Components of BC are:

1. Commitment Phase:

1.1. Committers and Verifiers: In a cryptographic setting, there are two parties involved-the committer and the verifier.

1.2. Commitment Function: The committer uses a commitment function to create a commitment to a specific bit. This function should be deterministic, meaning that given the same input (the bit), it will always produce the same commitment. Importantly, it should also be computationally infeasible to reverse the process and determine the original bit from the commitment.

1.3. Unpredictability: The committer ensures that the commitment does not reveal any information about the committed bit, making it computationally difficult for the verifier to guess or infer the bit value.

2. Reveal Phase:
2.1. Decryption Key: At a later agreed-upon time, the committer reveals the committed bit by providing a decryption key or additional information. This key allows the verifier to unveil the committed bit without any ambiguity.

3. Possible Applications:

3.1. Secure Communication: Bit commitment is utilized in secure communication protocols to establish trust between parties without revealing sensitive information immediately. For instance, it can be employed in secure channels to commit to a secret key that will later be used for encrypted communication.

3.2. Cryptocurrencies: In blockchain-based cryptocurrencies, bit commitment ensures the integrity of transactions. A party can commit to a transaction without revealing the details immediately, preventing double-spending or other malicious activities. The commitment is later opened to validate the transaction's authenticity.

3.3. Voting Systems: Bit commitment is crucial in cryptographic voting systems. Voters can commit to their choice without disclosing it, and later, when the voting period concludes, they reveal their committed choices. This ensures the privacy and integrity of the voting process.

3.4. Zero-Knowledge Proofs: Zero-knowledge proofs, a cryptographic technique where one party can prove the knowledge of certain information without revealing the information itself, often involve bit commitment. The commitment phase ensures that the information is fixed, and the reveal phase demonstrates knowledge without compromising security.

4. Challenges and Considerations:
4.1. Commitment Scheme Security: The security of a bit commitment scheme relies on the cryptographic strength of the commitment function. If the commitment can be easily reversed or predicted, it jeopardizes the entire process the security can also rely on authentication - Bit commitment requires the need for the authentication of the two players, otherwise a man in the middle could do a commitment for you.

In summary, bit commitment is a cryptographic technique that facilitates secure communication and transactions by allowing parties to commit to information without immediate revelation. Its applications span various domains where preserving the confidentiality and integrity of information is paramount.

In the framework of quantum communication, e.g. a secure BC implementation allows to implement the powerful primitive of Oblivious Transfer (OT) "Bennett, Charles & Brassard, Gilles & Crépeau, Claude & Skubiszewska, Marie-Hélène. (1991). Practical Quantum Oblivious Transfer: 576. 351-366.". The OT has several applications such as secure authentication "Crépeau, Claude & Salvail, Louis. (1995). Quantum Oblivious Mutual Identification. 133-146. 10.1007/3-540-49264-X_11" and Secure Two-Party Computation (S2PC) "Yakoubov, Sophia. 'A Gentle Introduction to Ya's Garbled Circuits.' (2017)." S2PC is a primitive allowing two parties to perform privacy-preserving distributed computation. That is, both parties can choose a private input, say I and J and compute a function f(I,J) of such inputs without sharing them with the other party. S2PC may be generalized to Secure Multi-Party Computation (SMPC), enabling the computation of a function of n private inputs possessed by *n* parties. This idea enables several useful applications4, such as secret auctions, secure voting, federated learning, one-time programs, and more. an application of SMPC is secure voting: citizens are able to elect one of two candidates with the guarantee that their votes are secret. Such a guarantee is stronger than that offered by regular elections, as it is based on strong and provable cryptographic protocols.

BC can be the starting point of a chain of protocols that serve security purposes: BC enables OT, and OT enables S2PC and/or SMPC. Hence, a practical implementation of a trustworthy BC scheme is of great importance, allowing us to obtain the full power of SMPC. If BC fails then SMPC fails, too.

The concept of BC as explained above was firstly implemented by means of classical cryptography. The most established BC protocols rely on either RSA or the Discrete Logarithm problem. The birth of quantum computing as a discipline has proven that such problems are easily solvable by quantum computers - so that BC is no longer trustworthy under quantum computing attacks. In fact, although such protocols are secure nowadays, quantum computers will be able to efficiently break them, as Shor's algorithm is able to efficiently break RSA and solve Discrete Logarithms. Furthermore, non-classical solutions of BC protocols, i.e. BC quantum protocols, are also under threat.

To understand the following, entanglement of quantum mechanics is explained in the following: Entanglement is a fundamental feature of quantum mechanics. In the Continuous Variable domain a bipartite quantum state of system AB is separable if we may write it as

$$\int p(x)\rho_A^{(x)} \otimes \rho_B^{(x)} \, dx,$$

where $\rho_A^{(x)}$ and $\rho_B^{(x)}$ define the density matrices of the quantum systems A and B, and p is a probability density. In other words, the bipartite system has probability p(x) $\rho_A^{(x)} \otimes \rho_B^{(x)}$. This formal definition captures the concept of two systems A and B each having an independent state.

On the other hand, some states cannot be written in that form: we call such states entangled. Two entangled systems A and B share strong non-local correlations that are beneficial in some scenarios. In simpler terms, the two systems have deep physical connections from which interesting properties arise. For example, suppose that one agent performs one measurement on system A, and another agent performs the same measurement on system B. The two measurement outcomes will be highly correlated, allowing the agent who measured A to predict the measurement outcome on system B with high accuracy or even to manipulate the measurement.

For example, messages relying on BC quantum protocols can be manipulated by creating two highly entangled photons by Alice. Alice can then send the first photon to Bob according to a BC schema and manipulate the first photon after Bob has received it by using the second photon by making use of the entanglement between the two photons.

In fact, the very first BC protocol by Bennet and Brassard is insecure because of an attack based on maximally entangled states. In such an attack Alice prepares several pairs of maximally entangled states. She keeps one state per pair to her side, and sends the other to Bob. By exploiting the properties of entanglement she is then able to perform some quantum operations to her local states and influence Bob's states at distance. This in turn allows her to reveal any commitment value of her choice, and makes the protocol vulnerable.

Currently, two proposals were discussed to provide a better security of BC quantum protocols:

Bounded Quantum Storage (BQS): However, as a downside this technique can only store a "few" qubits and will not work for most application that require more qubits;

Noisy Quantum Storage (NQS): is a generalization of BQS. It is assumed that if the involved parties have access to quantum memories, such memories are noisy. Hence as a drawback, after a while the stored qubits are corrupted and get possibly lost.

In the view of above, it is an object of the present invention to provide techniques to enhance the security of the BC technique. In particular, it is the task of the invention to provide BC protocol that can replace the existing ones and enhance the security of the BC technique.

This object is solved by the features of the independent claims.

The features of the various aspects of the invention described below or the various examples of implementation may be combined with each other, unless this is explicitly excluded or is technically impossible.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

It is a core idea of the invention to break the entanglement - or in other words to get rid of the entanglement - that can occur if the sender (Alice) uses (highly) entangled particles or photons to transmit information to a receiver (Bob). The invention proposes to send the particles or photons that carry the information through an entanglement-breaking channel so that this particle, quantum modes, quantum states or photons cannot longer be influenced by its formerly entangled counterpart. The concept of entanglement-breaking channels is known and for example described in the following document the disclosure of which is hereby incorporated into the invention: Holevo, A. S. "Entanglement-Breaking Channels in Infinite Dimensions." Problems of Information Transmission, vol. 44, no. 3, Sept. 2008, pp. 171-84. Crossref, https://doi.org/10.1134/s0032946008030010.

In the following will only speak of photons because messages are most likely to be transmitted via photons. However, the concept described also applied particles, in particular within quantum physics photons can be described as being particles as well.

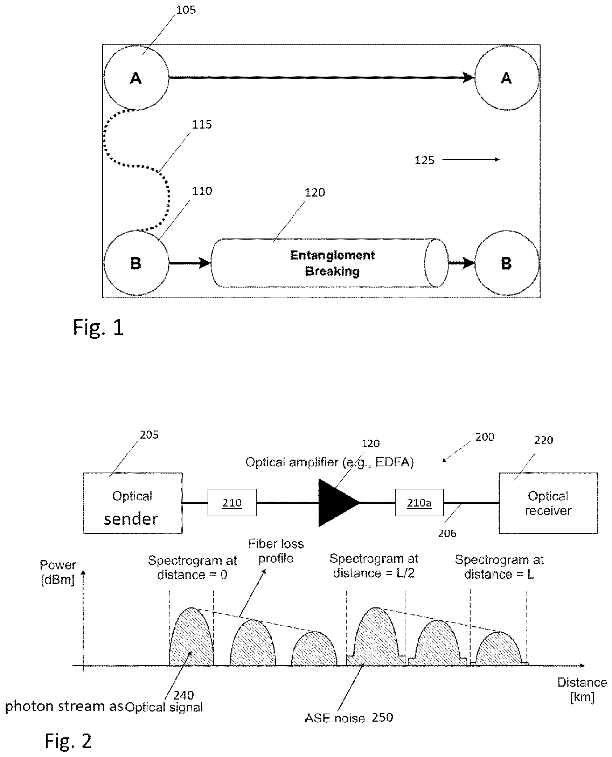

The basic concept of this entanglement-breaking channel can be described with the help of Fig. 1. Fig. 1 shows the quantum state of the system A 105, in particular of a first collection of photons 105, and a system B 110, in particular of a second collection of photons 110. Initially on the left side of the picture, the two systems 105, 110 are fully entangled as shown by the dotted line 115. While the evolution of the quantum system A 105 is undisturbed, the evolution of the quantum system B 110 is disturbed by sending it to an entanglement-breaking channel 120. This yields to the result - shown on the right side 125 - of an unentangled quantum system A 105 and B 110. Hence, the second collection of photons 110 cannot be influenced via the first collection of photons 105.

As the name says: entanglement-breaking channels can completely break entanglement between quantum states. If a user has two entangled particles, and feeds one of them to an entanglement-breaking channel, entanglement between the two particles is inevitably lost. As an advantage, this prevents any malicious use of entanglement to cheat concerting information bits.

According to a first aspect of the invention, a method for preventing manipulation of information between a sender and a receiver is disclosed, comprising the following steps

- Specifying a bit state b=0 or b=1 for a collection of photons, in particular N times, the bit state of the photons of the collection representing information, in particular a message (210, 210a), which is to be exchanged between the sender and a receiver in a tamper-proof manner; in principle, any number of photons is possible for the collection, so in principle the range can be [0, + infinity]. In practice, the number of photons follows a Gaussian distribution with a certain mean and variance, but this can strongly depend on the state under consideration; the number of photons can be chosen to be an optimal compromise between reliability, security and/or efficiency;

- transferring the collection of photons, in particular N times, into the specified bit state,

wherein it is a core idea of the invention that the collection of photons traverses at least along a section of their data path from the sender to the receiver through an entanglement-breaking channel in order to break the entanglement of the collection of photons, in particular the entanglement between the collection photons and a corresponding further collection of photons that were originally in an entangled state, wherein the collection and/or the further collection can be created be the sender .

This provides the technical advantage that no entanglement manipulation, in particular by Alice, can be performed on the photos that carry information after were received by the receiver, in particular by Bob.

In an embodiment, the bit state is represented by a quantum state, in particular a squeezed quantum state, of the photons.

This provides the advantage that quantum states can be applied to photons, in particular by optical devices, and send along an optical data path, wherein optical signals are anyhow frequently used in data communication.

In an embodiment, quantum state is generated by a squeezing means and a displacing means, in particular by applying the means to a vacuum state. The creates the potons of the collection.

This provides the advantage that due to those means the quantum states can be generated in a way so that they can be made entanglement free by the entanglement-breaking channel while keeping their quantum state after entanglement breaking has occurred so that it is possible to distinguish between different quantum states.

In an embodiment, the entanglement-breaking channel is provided by a network provider, in particular the network provider of the receiver.

This provides the advantage that the parties of the communication, in particular the receiver, can have trust in its network provider and that the network provider can arrange that the set of photos is actually guided through the entanglement-breaking channel before reaching the receiver.

In an embodiment, the entanglement-breaking channel is located within the core of the network provider.

This provides the advantage of being the most efficient location for the entanglement-breaking channel, at least in a starting phase of the procedure, when entanglement-breaking channels are not yet implemented uniformly throughout the whole network of the network provider. Locating the entanglement-breaking channel within the core has the advantage that the network operator can guide a corresponding set of photons or message through the entanglement-breaking channel located within the core.

In an embodiment, an amplification factor and/or a noise factor of the entanglement-breaking channel is set to break the entanglement of the collection photons.

This provides the advantage that it only two factors need to be set accordingly to break the entanglement.

In an embodiment, the amplification factor and/or the noise factor of the entanglement-breaking channel is arranged to keep the bit state of the collection of photons, in particular N times.

This provides the advantage that the receiver can extract the originally specified bit state that can correspond to an information that shall be exchanged between the sender and the receiver. In particular, multiple of those bit states can make up a message.

In an embodiment, the entanglement-breaking channel is a Gaussian amplifier, in particular an Erbium Doped Fiber Amplifier.

This provides the advantage that the Gaussian amplifier provides technically very beneficial properties to break the entanglement and at the same time keeping the bit state of the set of photons. It is a further advantage of the Gaussian amplifier that it can be described mathematically very well. The Gaussian amplifier provides technically well-defined properties that are beneficial for entanglement breaking and at the same time keeping the bit state of the set of photons. The Gaussian amplifier amplifies an input quantum state, while adding some Gaussian noise to it. Gaussian amplifiers can be described by two parameters:

- $\kappa$: the amplification factor is a real number larger than one, and sets the level of the amplification;

- $\mu$: the total noise represents the noise added to the input state of the amplifier, it is a real number larger than $\dfrac{\kappa-1}{2}$.

- The Gaussian amplifier breaks the entanglement if

$$\mu > \frac{\kappa-1}{2}$$

(formula 1)

It is of advantage to choose this kind of entanglement-breaking channel because amplifiers are pervasive in optical communications, as they mitigate the losses introduced by optical fibers. The most extensively used optical amplifier is the Erbium-Doped Fiber Amplifier (EDFA). This amplifier is a crucial component in optical communication systems, capable of significantly boosting the power of optical signals. One of its inherent characteristics is the production of Amplified Spontaneous Emission (ASE) noise, which exhibits a Gaussian distribution. For this reason, this amplifier type can be considered a Gaussian amplifier. This noise arises from the random, spontaneous emission of photons within the EDFA's erbium-doped fiber, a consequence of the thermal energy within the medium. As these spontaneous emissions are amplified along with the desired signal, they contribute Gaussian noise to the amplified output.

In an embodiment, parameters of the Gaussian amplifier are set to $\mu > \dfrac{\kappa-1}{2}$ to break the entanglement, in particular $\mu$ is set as close as possible to $\dfrac{\kappa-1}{2}$.

This provides the advantage that the entanglement is reliably broken by not introducing too much artificial noise that disturbs the bit state of the collection of photons. There is always a low risk that the bit state of a photon is being disturbed even if the Gaussian amplifier is being operated within that limit. However, keeping the limit reduces this risk to an as low as possible level. Performing the procedure N-Times makes the process even more reliable. In practice, this low level risk does not make any problems in determining the original bit state by the receiver.

In an embodiment, test messages are sent between the receiver and the network provider or between the receiver and the sender to set the values $\mu$ and/or $\kappa$.

This provides the advantage of providing an efficient means to determine the values $\mu$ and/or $\kappa$ individually for every single case, in particular before starting the information exchange between the sender and/or the receiver.

In an embodiment, a network provider that operates the entanglement-breaking channel creates a flag, certificate and/or a signature to indicate that set of photons, in particular the message, was processed by the entanglement-breaking channel, in particular the flag, the certificate and/or the signature is bound to the collection of photons.

This provides the advantage that the receiver can evaluate the flag, certificate and/or the signature to determine if the collection of photons, in particular the message, actually traversed the entanglement-breaking channel so that the entanglement of the photons was broken. Preferably, the binding is done in a way that it cannot be manipulated or that a manipulation is being visible for the receiver.

According to a second aspect of the invention, an entanglement-breaking channel for preventing manipulation of information between a sender and a receiver is disclosed, comprising

an input interface to a data path configured to receive a collection of photons of a specified bit state;

Gaussian amplifier means configured to break an entanglement of the collection of photons while keeping their specified bit state;

an output interface configured to send the non-entangled collection of photons of the specified bit state to the data path.

The entanglement-breaking channel provides the advantage of being a device that can be used in a telecommunication environment to efficiently break entanglement of photons and that can be run by network providers, in particular within their core, for example within a 5G or 6G core. In principle, the entanglement-breaking channel can be implemented within any communication environment that uses optical data paths.

According to a third aspect of the invention, a stream of non-entangled photons of a specified bit state obtainable by sending photons of the specified bit state through the inventive entanglement-breaking channel is disclosed.

This stream of non-entangled photons provides the advantage that it can be send to any receiver and it cannot be manipulated by entanglement techniques. It can even be send across different networks of different network providers. It is not possible that it can be brought back into an entangled state.

According to a fourth aspect of the invention, a sender for preventing manipulation of information is disclosed, wherein the sender is configured to set a bit state b=0 or b=1 for a collection of photons, in particular N times, the bit state of the photons of the collection representing information, in particular a message, which is to be send by the sender and wherein the sender comprises a squeezing means and a displacing means to transform the photons of the collection into the bit state. The sender can comprise an interface to the data path.

According to a fifths aspect of the invention, a receiver configured to receive a non-entangled collection of photons in a specified bit state is disclosed, comprising measuring means to determine the bit state of the collection of photons.

According to a sixths aspect of the invention a communication system for preventing manipulation of information between a sender and a receiver is disclosed that is configured to perform the method described above.

The communication system can be any communication system that uses optical signals for data transmission. In particular, the communication system comprises the entanglement-breaking channel, the optical data path, the sender, and/or the receiver. The communication system provides the advantages described within the context of the method.

In the following, preferred implementation examples of the present invention are explained with reference to the accompanying figure:

Fig. 1:   shows an entanglement-breaking channel that breaks the entanglement of the particles and/or photons.

Fig. 2:   shows a communication system according to the invention;

Fig. 3:   shows an inventive BC schema;

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

Fig. 2 shows a communication system 200 according to the invention.

The communication system 200 comprises of a sender unit 205, in short described as being the sender 205, a data path 206, in particular an optical data path 206, an entanglement-breaking channel 120, in particular a Gaussian amplifier like a EDFA 120, that is placed within the optical data path 206 and/or a receiver unit 220, in short described as being the receiver 220.

A message 210 that comprises a collection of photons of a specific quantum state - details will be described below - are sent by the sender 205 via the data path 206 to the receiver 220. As it is in principle possible that the sender creates further and corresponding photons oft a highly entangled state he could in principle manipulate the collection of photons received by the receiver 220. However, as the collection of photons traverse through the entanglement breaking channel 120 this entanglement is being broken so that the sender 205 is no longer able to manipulate the specific quantum state of the photons that are received by the receiver 220.

The lower part of the picture displays that the collection of photons can be sent as a photon stream 240 along the data path 206. Due to losses while traveling along the data path 206, wherein the data path 26 can be made up by fiberglass, the power amplitude of the optical signal of the photo stream 240 decreases. The entanglement-breaking channel 120 in the embodiment of the Gaussian amplifier 120 amplifies the optical signal and adds some ASE noise 250 to generate a new unentangled photon stream 210a can also be described as an unentangled message 210a. Wherein the application and the level of ASE 250 is being adjusted as to break the entanglement and if possible to keep the quantum state of the set of photons. As he can always happen that the quantum state of the set of photons is being disturbed, the process can be performed N-Times to make the process more reliable.

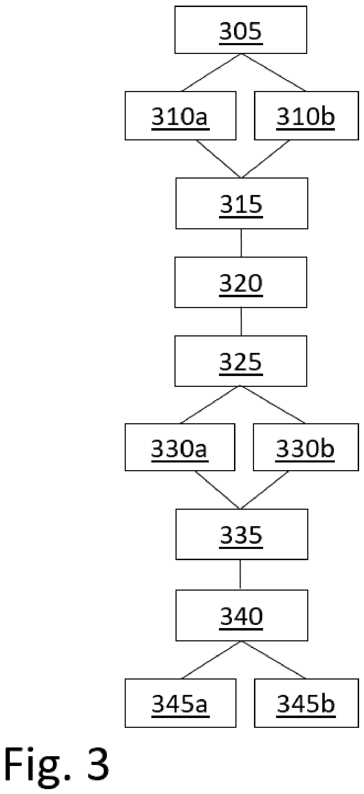

As will be described within the context of Fig. 3, the receiver 220 receives the unentangled photon stream 210a and can evaluate the originally specified quantum state without the risk of an entanglement manipulation. Whole messages can be sent by exchanging multiple photon streams 210, 210a between the sender 205 and the receiver 220.

Further details or embodiments of Fig. 2 are described in the following:

The optical sender 205 can comprise a (power-limited) laser source, attenuators (to reach the quantum domain) and a non-linear optical element, i.e. a non-linear crystal, to impose phase or amplitude squeezed quantum states - in time, frequency or space domain. Hence, the non-linear crystal is a possible squeezing means.

After having created the squeezed state, it can be displaced it by means of an imbalanced beam splitter. Hence, the beam splitter is a possible displacement means. The beam splitter receives the squeezed vacuum state of a photon on one port, and a coherent state on the other. If the transmittance on the squeezed vacuum port is close to 1, say 1 - $\tau$ with 1 » $\tau$ and the coherent state has amplitude $\beta = \alpha/\sqrt{t}$, the beam splitter's first output approximates a displaced squeezed vacuum with displacement $D(\alpha)$. Technical details can be looked up in:" Matteo G.A. Paris, Displacement operator by beam splitter, Physics Letters A, Volume 217, Issues 2-3, 1996, Pages 78-80, ISSN 0375-9601, https://doi.org/10.1016/0375-9601(96)00339-8."

The Gaussian amplifier 120 (or the set of linear amplifiers) amplifies the photo stream 240 send by the laser in accordance to formula 1: $\mu > \frac{\kappa-1}{2}$ .

Hence photons are added to the squeezed quantum state. Additionally, Gaussian noise is added, which causes a degradation of the amplified signal. As a result, the unentangled photo stream 210a is created.

To run the BC protocol described below securely, it is beneficial to use a linear amplifier that adds a minimum noise level and at the same time (side note: there is a quantum limit, of how much noise must be added) and the amplification shall be large enough to securely break a possible entanglement of the quantum states prepared by Alice prior to transmission. Hence, in an embodiment when implementing the invention, a careful adjustment of the amplification parameters ($\kappa$, $\mu$) is of importance. For large values of the total noise $\mu$, the amplifier can disturb the state of the photons so much that most of (or all) the key information is lost. At the same time, the level of amplification mustn't be too low, as the amplifier's noise is what guarantees the entanglement-breaking property. $\mu$ needs to fulfill $\mu > \frac{\kappa-1}{2}$ to break entanglement. It is a discovery of invention that the protocol achieves optimal security when $\mu$ approaches $\frac{\kappa-1}{2}$ while at the same time $\kappa$ goes to infinity. In other words, a strong amplification that is just above the entanglement-breaking limit seems to be the optimal case. The idea is to have strong amplification to strengthen the signal, but with barely enough noise to break entanglement.

The receiver 220 can be a classical homodyne detection system, comprising of an idler laser (preferably operating on the same frequency as the signal laser), a beam splitter and/or a photo diode. By changing the phase of the idler laser, the homodyne detection system may project the phase space representation of the amplified laser beam onto either axis, for example the amplitude, phase or any superimposed axis.

Before describing a BC protocol according to the invention, two concepts are explained that are used in the context of the protocol.

Coherent states of light are a concept in quantum optics and quantum mechanics that describe a particular type of quantum state for electromagnetic fields, such as light. These states were introduced by Roy J. Glauber and are used to provide a quantum mechanical description of classical optical fields. Coherent states have some interesting properties and play a significant role in the field of quantum optics. Coherent States of light such states are Gaussian states characterized by minimal uncertainty and equal uncertainty in position and momentum. Each coherent state is completely determined by a complex number $\alpha$, called amplitude. Coherent states are obtained by applying a special operation called displacement to a vacuum state. The displacement shifts the state's position and momentum according to the amplitude parameter.

Displacing a quantum state of light involves applying a displacement operator to the state. The displacement operator is a mathematical operation that shifts the quantum state in phase space, modifying both the position and momentum components. This operation is commonly used in the context of quantum optics.

Displacement Operator: The displacement operator, denoted by $D(\alpha)$, can be defined as:

$$D(\alpha) = e^{\alpha a^+ - \alpha^* a}$$

Wherein $a^+$ and $a$ are the creation and annihilation operators, respectively, associated with the mode of the quantum field (e.g., a mode of light). The complex number $\alpha$ determines the amount and direction of the displacement in phase space.

Hence, an initial quantum state of light $|\psi\rangle$ can be displaced as follows:

$$|\Psi'\rangle = D(\alpha)|\psi\rangle$$

Physical Interpretation:

Phase Space: In quantum optics, the phase space for a quantum state is often represented by the complex plane, with the real and imaginary parts corresponding to position and momentum-like variables.

Displacement Vector: The complex number $\alpha$ acts as a displacement vector in this phase space. The real part of $\alpha$ corresponds to a displacement in position, while the imaginary part corresponds to a displacement in momentum. Classical Analogy: Displacing a quantum state using $D(\alpha)$ is analogous to shifting the center of a classical probability distribution in phase space.

Application: Displacement operations are commonly used in various quantum optics experiments and quantum information processing tasks. They are used, for example, in the generation of distributed states.

Manipulating and displacing quantum states of light often involves specialized instruments and devices that can operate at the quantum level. Here are some instruments commonly used in quantum optics experiments for displacing quantum states of light:
Squeezers: Description: Squeezers are devices that can generate squeezed states of light, which are states with reduced uncertainty in one of the conjugate variables (e.g., position or momentum). Operation: By manipulating the vacuum fluctuations in one of the quadratures, squeezers effectively squeeze the quantum state in phase space where the uncertainty in one variable (position or momentum) is reduced at the expense of increased uncertainty in the conjugate variable.

Beam Splitters: Description: Beam splitters are optical devices that split an incident beam of light into two or more beams. They are often used in interferometry setups. Operation: By adjusting the beam splitter parameters, one can create interference patterns that effectively displace the quantum state.

Phase Shifters: Description: Phase shifters introduce a controlled phase shift to the light passing through them. Operation: Adjusting the phase shift in a specific mode can be equivalent to displacing the quantum state in the phase space.

Homodyne and Heterodyne Detectors: Description: These detectors are used to measure the quadrature amplitudes of a quantum state. Operation: By adjusting the local oscillator phase or frequency, one can effectively project the phase pace distribution of the quantum state depending on the phase of the idler laser.

Parametric Down-Converters: Description: Parametric down-converters generate pairs of entangled photons through a nonlinear optical process. Operation: The generated entangled states can be manipulated to perform quantum state displacements.

Optical Cavities: Description: Optical cavities, such as Fabry-Perot cavities, can be used to enhance or modify specific modes of light. Operation: By adjusting the cavity parameters, one can manipulate the quantum state passing through the cavity.

Electro-Optic Modulators: Description: These modulators change the properties of light by applying an electric field.

In quantum physics, squeezed states of light are non-classical states of light that exhibit a reduced uncertainty in one of the two quadratures of the electric field, while the uncertainty in the other quadrature is increased. This is in contrast to coherent states of light, which have equal uncertainty in both quadratures. The quadratures of the electric field are the two quantities that represent the amplitude of the light wave, represented by the real and imaginary parts of the complex field amplitude. In classical light, the quadratures are always perfectly correlated- Squeezed states of light exist where the uncertainty in one quadrature can be reduced below the classical limit, while the uncertainty in the other quadrature is increased. This is a consequence of the Heisenberg uncertainty principle, which states that the uncertainty in two complementary quantities cannot both be zero. Squeezed states of light can be generated using a variety of techniques, including optical parametric oscillators (OPOs) and four-wave mixing (FWM) or squeezed states can be generated using nonlinear optical processes, such as parametric down-conversion in nonlinear crystals. OPOs are nonlinear optical devices that can convert a pump laser beam into two output beams, one of which is squeezed and the other of which is anti-squeezed. FWM is a nonlinear optical process in which two or more input beams interact to produce an output beam that is squeezed or anti-squeezed. Squeezing: while coherent states have equal uncertainty in position and momentum, this is not a universal property. Some states might be characterized by highly uncertain position, but well-defined momentum and vice-versa. This idea corresponds to a physical operation, called squeezing. By taking a coherent state and squeezing its position (or momentum) we can decrease the position's uncertainty (momentum's uncertainty) but inevitably increase the uncertainty in momentum (position). The intensity of squeezing is determined by a real parameter r called squeeze factor.

The following BC protocol, which can comprise of a commit and/or an unveil phase, of Fig. 3 can be used and can described by the following steps:
In step 305: The sender 205, e.g. Alice 205, sets a commitment value b to be 0 or 1, wherein the committed state b can be part of the message 210; in the following sender 205 can generate a collection of photons, in particular N times, wherein the photons within the collection represent squeezed and/or displaced states in order to distinguish b=0 from b=1. The photons within each collection are to transformed uniformly to b=0 or b=1.

This can be performed N times to make the procedure more reliable and to secure the procedure from attacks which are different from entanglement attacks, e. g. with respect to the verification step described below. Of course, choosing N too high makes the method less efficient. N can depend on the path length, path noise, physical properties of the amplifier, epsilon. By choosing suitable parameters N should be between 1000 and 10000.

In step 310a: if b = 0 or alternatively if b = 1, the sender 205 squeezes with a squeezing means and displaces with a displacement means the x position quadrature of the photons of the collection, in particular N times. Hence, an individual collection of photons can be described as $n_i$. The displacements are samples from a zero-mean Gaussian distribution with variance $\Sigma_0^2$. The displacement of the collection $n_i$ of photons is $x_i$. The

squeeze factor is $r_1 = \ln(2\sigma_1^2)$, wherein $\sigma_1$ is a real

number that can be tuned to ensure the protocol's security.

In step 310b: if b = 1 or alternatively if b = 0, the sender 205 squeezes with a squeezing means and displaces with a displacement means the p momentum quadrature (what is the p momentum quadrature) of the photons of the set, in particular N times. The displacements are samples from a zero-mean Gaussian distribution with variance $\Sigma_2^2$ . The displacement of collection $n_i$ of the photons is $x_i$. The squeeze factor is $r_2 = \ln(2\sigma_2^2)$ , wherein $\sigma_2$ is a real number that can be tuned to ensure the protocol's security. The $\sigma$ values shall respect the equation below, and the should be very low (close to 0). The only difference between $\sigma_1$ and $\sigma_2$ can occur when they are used: $\sigma_1$ is to commit to 0, $\sigma_2$ is to commit to 1.

A key point of the steps 310a and 310b is that b=0 und b=1 need to be squeezed and/or displaced differently in order to be able to distinguish them, respectively. The or alternative in the steps 310a,b basically states that each state b=0 or b= 1 can be displaced with respect to the position or the momentum quadrature. But, if it is chosen to displace b=0 with respect to the position quadrature then b =1 needs to be displaced with respect to the momentum quadrature and vice versa. If the parameters obey the following relation, this ensures that the receiver 220, e.g. Bob 220, cannot determine the state of the collection of photons before the unveil phase:

$$\frac{1}{16\,\sigma_1^2 \sigma_2^2} = 1 + \frac{\Sigma_1^2}{2\,\sigma_1^2} + \frac{\Sigma_2^2}{2\,\sigma_2^2}\,.$$

In step 315: the sender 205 stores the displacements $x_1$ or in case the process is done N times, the vector of uses displacements $(x_1, x_2, ..., x_N)$.

In step 320: the sender 205 sends the set of photons, in particular N times, having the state b=1 or b = 0 as a photon stream 240 via the entanglement-breaking channel 120 to the receiver 220. The sender 205 also sends his choice of b, b=0 or b=1, and the used displacements $x_1$ or $(x_1, x_2, ..., x_N)$ to the receiver 220 by using the entanglement-breaking channel 120 or by using another channel without entanglement breaking properties. Preferably, the most efficient channel is used to send the used displacements $x_1$ or $(x_1, x_2, ..., x_N)$.

In step 325: The receiver 220 receives the photon stream 240 of the set of photons, in particular N times, wherein the photons are in a non-entangled state and he also receives the used displacements $x_1$ or $(x_1, x_2, ..., x_N)$.

In step 330a: if b = 0 or alternatively if b = 1, the receiver 220 measures the position quadrature of the set of photons as $y_1$, in particular N times as $(y_1, y_2, ..., y_N)$, e.g. with a homodyne detector(s).

In step 330b: if b = 1 or alternatively if b = 0, the receiver 220 measures the momentum quadrature of the set of photons as $y_1$, in particular N times as $(y_1, y_2, ..., y_N)$, e.g. with a homodyne detector(s).

In step 335: the receiver 220 stores the measurement $y_1$ or the vector $(y_1, y_2, ..., y_N)$ and performs the verification *calculate* $|x_1 - y_1| \le \varepsilon$, in particular N times as for $1 \le i \le N$ *calculate* $|x_i - y_i| \le \varepsilon$, wherein $\varepsilon$ is predetermined threshold depending on the protocol's parameters. This verification serves the purpose to determine if the state was chosen to be b=0 or b =1 and to make the procedure robust with respect to non-entanglement attacks.

In step 340: Every time this check is successfully passed (in particular N times), the receiver 220 can increments a local counter S.

In step 345a, the receiver 220 accepts the commitment and trusts the message if $S \in (S_{min}, S_{max})$ for predefined $S_{min}, S_{max}$ or in step 345b the receiver 220 rejects the commitment and does not trust the message.

Due to the use of the entanglement-breaking channel 120, entanglement attacks are impossible. Of course, the whole message can comprise of multiple bit commitments.

As already explained, the security of the entanglement-breaking channel Bit Commitment protocol depends strongly on the correct amplifier operation, so that formula 1 holds. This condition can be realized in a real network of a network operator as follows:

Option 1: The sender 205 and/or the receiver 220 have trust in the network operator and the network operator's operational monitoring systems that the Gaussian amplifiers 120 of the network operator work at correct amplification values and that the network operator guides the message 210 through the Gaussian amplifiers 120 on its way from the sender 205 to the receiver 220. For that that purpose the network operator can implement the at least one Gaussian amplifiers 120 within its core network so that he can in principle guide every message through the Gaussian amplifiers 120. In particular, the entanglement-breaking channel 120 can be adjusted with respect to the distinct properties of a message 210 in the embodiment as the photo stream 240. The individual adjustment can depend on the number of photons in the photo stream 240, the path length and/or the path's properties between the sender 205 and the receiver 220. The network operator can bind a flag, certificates and/or a signature to the message 210a after the entanglement-breaking channel 120 was used so that the receiver 220 can be sure that the message 210a cannot be in manipulated.

Option 2: in principle it is possible that the amplifier 120 that does the entanglement breaking can be manipulated or that an optical path is being used that avoids the entanglement-breaking channel 120. In these cases, it is nevertheless important to make the protocol as secure as possible. This can be done as follows: It suffices to assume that there is some known power bound on the quantum states that parties (Alice and Bob) can prepare and send. In fact, the amplifier adds a significant amount of energy to amplified quantum states: if it is off and there is no feasible way to prepare high energy states, this will cause a significant decrease in energy that the other user can detect via appropriate measurements (e.g. power level). Even if such a power bound is not securely assumable, one can use the technique of noise phase estimation to verify whether the bound has been obeyed or not. For instance, if it can be assumed that the amplifier is secretly removed from the data path by an attacker while the transmitter output power is increased such that the amount of energy of the quantum states stays unchanged. In this case, it is still possible to detect this attack by estimating the phase noise, mainly originated from the Kerr effect. This is because the higher-power signal regime can induce stronger nonlinear effects over the entire length of the fiber, leading to greater signal degradation. This means that the proposed scheme is relatively robust to external attacks.

In an embodiment, the invention can be implemented without quantum memories. The latter is a strong practical advantage due to the low coherence times and fidelities of currently available quantum memories. This advantage is achieved by doubling the number of quantum states sent at commitment time. Instead of storing them, Bob chooses one random quadrature to measure for each state, and stores the classical measurements. At unveil time Bob discovers which quadrature was used by Alice to commit, and discards the measurements obtained by measuring the wrong quadrature. The rest of the protocol is unchanged. As an example, suppose that Alice commits to 0 by squeezing and displacing the position quadrature. Furthermore, suppose she sends 4 states and Bob measures the quadratures position, momentum, momentum, and position. At unveil time Alice reveals b=0, and Bob discards the 2nd and 3rd measurements.

As a summary, the inventions and/or embodiments of the invention can provide the following advantages:

- a Bit Commitment protocol in times of RSA-breaking quantum computers;

- Bit Commitment and Oblivious Transfer lead to Secure Multi-Party Computations with a lot of interesting applications, especially for data privacy critical data;

- It can easily be deployed in provider fiber and line of sight networks, therefore, it is a modular, flexible, low-cost and high-benefit solution;

- Possible applications are in the field of data encryption, like secret auctions, secure voting, federated learning, one-time programs, secure health data management, and many more;

- Practical deployable assumptions on the Bit Commitment protocol to overcome the lack of information theoretical secrecy. Especially the guarantee of operating amplifiers is easily adoptable through standard OSS measures executed by telecom operators;

## Claims

1. Method for preventing manipulation of information between a sender and a receiver, comprising the following steps

    • Specifying a bit state b=0 or b=1 for a collection of photons, in particular N times, the bit state of the photons of the collection representing information, in particular a message (210, 210a), which is to be exchanged between the sender and a receiver in a tamper-proof manner;
    • transferring the collection of photons, in particular N times, into the specified bit state,

    **characterized in**
    **that** the collection of photons traverses at least along a section of their data path from the sender to the receiver through an entanglement-breaking channel (120) in order to break the entanglement of the collection of photons, in particular the entanglement between the collection of photons and a corresponding further collection of photons that were originally in an entangled state.

2. The method according to claim 1, wherein the bit state is represented by a quantum state of the photons.

3. The method according to claim 2, wherein the quantum state is generated by a squeezing means and a displacing means, in particular by applying the means to a vacuum state.

4. The method according to any one of the preceding claims, wherein the entanglement-breaking channel (120) is provided by a network provider, in particular the network provider of the receiver (220).

5. The method of claim 4, wherein the entanglement-breaking channel (120) is located within the core of the network provider.

6. The method according to any one of the preceding claims, wherein an amplification factor and/or a noise factor of the entanglement-breaking channel (120) is set to break the entanglement of the collection of photons.

7. The method of claim 6, wherein the amplification factor and/or the noise factor of the entanglement-breaking channel (120) is arranged to keep the bit state of the collection of photons, in particular N times.

8. The method according to any one of the preceding claims, wherein the entanglement-breaking channel (120) is a Gaussian amplifier, in particular an Erbium Doped Fiber Amplifier.

9. The method of the claims 6 to 7 and 8, wherein parameters of the Gaussian amplifier are set to

$$\mu > \frac{\kappa-1}{2}$$ to break entanglement, in particular $\mu$

is set as close as possible to $\frac{\kappa-1}{2}$ .

10. The method of the claim 9, wherein test messages are sent between the receiver and the network provider or between the receiver and the sender to set the values $\mu$ and/or $\kappa$.

11. The method of any of the claims, wherein a network provider that operates the entanglement-breaking channel (120) creates a flag, certificate and/or a signature to indicate that set of photons, in particular the message, was processed by the entanglement-breaking channel (120), in particular the flag, the certificates and/or the signature is bound to the set of photons.

12. Entanglement-breaking channel for preventing manipulation of information between a sender and a receiver, comprising

an input interface to a data path configured to receive a collection of photons of a specified bit state;
Gaussian amplifier means configured to break an entanglement of the collection of photons while keeping their specified bit state;
an output interface configured to send the non-entangled collection of photons of the specified bit state to the data path.

13. A stream of non-entangled photons of a specified bit state obtainable by sending photons of the specified bit state through the Entanglement-breaking channel (120) of claim 12.

14. Sender for preventing manipulation of information, wherein the sender is configured to set a bit state b=0 or b=1 for a collection of photons, in particular N times, the bit state of the collection of photons representing information, in particular a message (210, 210a), which is to be send by the sender and wherein the sender comprises a displacing means and a squeezing means to transform the collection of photons into the bit state.

15. Receiver configured to receive a non-entangled collection of photons in a specified bit state comprising measuring means to determine the bit state of the collection of photons.

16. Communication system for preventing manipulation of information between a sender and a receiver configured to perform the method of any of the claims 1-11.

**Amended claims in accordance with Rule 137(2) EPC.**

1. Method for preventing manipulation of information between a sender and a receiver, comprising the following steps

• Specifying a bit state b=0 or b=1 for a collection of photons, in particular N times, the bit state of the photons of the collection representing information, in particular a message (210, 210a), which is to be exchanged between the sender and a receiver in a tamper-proof manner;
• transferring the collection of photons, in particular N times, into the specified bit state,

**characterized in**
**that** the collection of photons traverses at least along a section of their data path from the sender to the receiver through an entanglement-breaking channel (120) in order to break the entanglement of the collection of photons, in particular the entanglement between the collection of photons and a corresponding further collection of photons that were originally in an entangled state.

2. The method according to claim 1, wherein the bit state is represented by a quantum state of the photons.

3. The method according to claim 2, wherein the quantum state is generated by a squeezing means and a displacing means, in particular by applying the means to a vacuum state.

4. The method according to any one of the preceding claims, wherein the entanglement-breaking channel (120) is provided by a network provider, in particular the network provider of the receiver (220).

**5.** The method of claim 4, wherein the entanglement-breaking channel (120) is located within the core of the network provider.

**6.** The method according to any one of the preceding claims, wherein an amplification factor and/or a noise factor of the entanglement-breaking channel (120) is set to break the entanglement of the collection of photons.

**7.** The method of claim 6, wherein the amplification factor and/or the noise factor of the entanglement-breaking channel (120) is arranged to keep the bit state of the collection of photons, in particular N times.

**8.** The method according to any one of the preceding claims, wherein the entanglement-breaking channel (120) is a Gaussian amplifier, in particular an Erbium Doped Fiber Amplifier.

**9.** The method of the claims 6 to 7 and 8, wherein parameters of the Gaussian amplifier are set to

$$\mu > \frac{\kappa - 1}{2}$$ to break entanglement, in particular $\mu$

is set as close as possible to $\frac{\kappa - 1}{2}$, wherein $\mu$ is a total noise parameter and $\kappa$ an amplification factor of the Gaussian amplifier.

**10.** The method of the claim 9, wherein test messages are sent between the receiver and the network provider or between the receiver and the sender to set the values $\mu$ and/or $\kappa$.

**11.** The method of any of the claims, wherein a network provider that operates the entanglement-breaking channel (120) creates a flag, certificate and/or a signature to indicate that set of photons, in particular the message, was processed by the entanglement-breaking channel (120), in particular the flag, the certificates and/or the signature is bound to the set of photons.

**12.** Entanglement-breaking channel for preventing manipulation of information between a sender and a receiver, comprising

an input interface to a data path configured to receive a collection of photons of a specified bit state;
Gaussian amplifier means configured to break an entanglement of the collection of photons while keeping their specified bit state;
an output interface configured to send the non-entangled collection of photons of the specified bit state to the data path.

**13.** A stream of non-entangled photons of a specified bit state obtainable by sending photons of the specified bit state through the Entanglement-breaking channel (120) of claim 12.

**14.** Sender for preventing manipulation of information, wherein the sender is configured to set a bit state b=0 or b=1 for a collection of photons, in particular N times, the bit state of the collection of photons representing information, in particular a message (210, 210a), which is to be send by the sender and wherein the sender comprises a displacing means and a squeezing means to transform the collection of photons into the bit state.

**15.** Receiver configured to receive a non-entangled collection of photons in a specified bit state comprising measuring means to determine the bit state of the collection of photons.

**16.** Communication system for preventing manipulation of information between a sender and a receiver configured to perform the method of any of the claims 1-11,
wherein the communication system comprises the entanglement-breaking channel of claim 12, the sender of claim 14, the receiver of claim 15 to send the stream of non-entangled photons of claim 13 to the receiver.

Fig. 1

Fig. 2

```
          ┌─────────────┐
          │     305     │
          └─────────────┘
           ╱           ╲
 ┌─────────────┐   ┌─────────────┐
 │    310a     │   │    310b     │
 └─────────────┘   └─────────────┘
           ╲           ╱
          ┌─────────────┐
          │     315     │
          └─────────────┘
                 │
          ┌─────────────┐
          │     320     │
          └─────────────┘
                 │
          ┌─────────────┐
          │     325     │
          └─────────────┘
           ╱           ╲
 ┌─────────────┐   ┌─────────────┐
 │    330a     │   │    330b     │
 └─────────────┘   └─────────────┘
           ╲           ╱
          ┌─────────────┐
          │     335     │
          └─────────────┘
                 │
          ┌─────────────┐
          │     340     │
          └─────────────┘
           ╱           ╲
 ┌─────────────┐   ┌─────────────┐
 │    345a     │   │    345b     │
 └─────────────┘   └─────────────┘
```

Fig. 3

**EUROPEAN SEARCH REPORT**

Europäisches Patentamt
European Patent Office
Office européen des brevets

Application Number

EP 23 21 7229

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHRISTIAN WEEDBROOK ET AL: "Gaussian Quantum Information", ARXIV.ORG, CORNELL UNIVERSITY LIBRARY, 201 OLIN LIBRARY CORNELL UNIVERSITY ITHACA, NY 14853, 14 October 2011 (2011-10-14), XP080533027, DOI: 10.1103/REVMODPHYS.84.621 * page 15 - page 29 * | 1-11,16 | INV. H04L9/08 H04B10/70 |
| A | PIRANDOLA S ET AL: "Advances in Quantum Cryptography", ARXIV.ORG, CORNELL UNIVERSITY LIBRARY, 201 OLIN LIBRARY CORNELL UNIVERSITY ITHACA, NY 14853, 4 June 2019 (2019-06-04), XP081373072, * page 7 - page 17 * | 1-11,16 | |
| A | UZI PEREG: "Communication Over Entanglement-Breaking Channels With Unreliable Entanglement Assistance", ARXIV.ORG, CORNELL UNIVERSITY LIBRARY, 201 OLIN LIBRARY CORNELL UNIVERSITY ITHACA, NY 14853, 28 May 2023 (2023-05-28), XP091522042, * the whole document * | 1-11,16 | **TECHNICAL FIELDS SEARCHED (IPC)** H04L H04B |

The present search report has been drawn up for all claims

| Place of search | Date of completion of the search | Examiner |
|---|---|---|
| Munich | 3 June 2024 | Apostolescu, Radu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-11, 16

☐ The present supplementary European search report has been drawn up for those parts of the European patent application which relate to the invention first mentioned in the claims (Rule 164 (1) EPC).

| | | LACK OF UNITY OF INVENTION | Application Number |
|---|---|---|---|
| | Europäisches Patentamt European Patent Office Office européen des brevets | **SHEET B** | EP 23 21 7229 |

The Search Division considers that the present European patent application does not comply with the requirements of unity of invention and relates to several inventions or groups of inventions, namely:

```
1. claims: 1-11, 16

        Method involving collection of photons traversing along
        their data path between a sender and a receiver through an
        entanglement-breaking channel
                         ---

2. claims: 12, 13

        Entanglement-breaking channel comprising input/output
        interfaces and Gaussian amplifier means
                         ---

3. claim: 14

        Sender comprising displacing and squeezing means
                         ---

4. claim: 15

        Receiver comprising measuring means
                         ---
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BENNETT, CHARLES** ; **BRASSARD, GILLES** ; **CRÉPEAU, CLAUDE** ; **SKUBISZEWSKA, MARIE-HÉLÈNE**. *Practical Quantum Oblivious Transfer*, 1991, vol. 576, 351-366
- **CRÉPEAU, CLAUDE** ; **SALVAIL, LOUIS**. *Quantum Oblivious Mutual Identification.*, 1995, 133-146
- **YAKOUBOV, SOPHIA**. *A Gentle Introduction to Ya's Garbled Circuits.*, 2017
- **HOLEVO, A. S.** Entanglement-Breaking Channels in Infinite Dimensions.. *Problems of Information Transmission*, September 2008, vol. 44 (3), 171-84, https://doi.org/10.1134/s0032946008030010
- **MATTEO G.A.** Paris, Displacement operator by beam splitter. *Physics Letters A*, 1996, vol. 217 (2-3), ISSN 0375-9601, 78-80, https://doi.org/10.1016/0375-9601(96)00339-8.